# EUROPÄISCHE PATENTANMELDUNG

(11) **EP 3 103 552 A1**
(43) Veröffentlichungstag der Anmeldung: **14.12.2016**
(21) Anmeldenummer: 15001714.3
(22) Anmeldetag: 10.06.2015
(51) Int. Cl.: B01L 1/00, B01J 19/12, B01J 19/18, B01J 19/00

(54) **SCHUTZ- UND VERSORGUNGSVORRICHTUNG, REAKTORVORRICHTUNG UND PROZESSSYSTEM**

(71) Anmelder: Peschl Ultraviolet GmbH, 55130 Mainz (DE)
(72) Erfinder: PESCHL, Alexander, 55130 Mainz (DE); PESCHL, Günther, 55130 Mainz (DE); BRAUN, André, 31620 Cépet (FR)
(74) Vertreter: Drobnik, Stefanie

(57) **Zusammenfassung**

Die vorliegende Erfindung stellt eine Schutz- und Versorgungsvorrichtung (1) für einen chemischen Reaktor (2,2') und ferner eine diese umfassende Reaktorvorrichtung und ein modulares Prozesssystem bereit Die Schutz- und Versorgungsvorrichtung (1) wird durch ein Gehäuse (11) gebildet, dessen Wände doppelwandig ausgeführt sind und zumindest einen Kühlmittelein- und -auslass (112,113,19) aufweisen. Dabei ist an einer Fläche des kastenförmigen Gehäuses (11) eine verschließbare Tür (12) ausgebildet, in der zumindest eine elektrische Versorgungsvorrichtung aufgenommen ist, die mit zumindest einer innen an der Tür (12) angeordneten Steckdose (14) und zumindest einem außen an der Tür (12) angeordneten Schalter (13) zur Schaltung der zumindest einen Steckdose (14) verbunden ist. Ferner ist ein Kontaktschalter zwischen der Tür (12) und dem übrigen Gehäuse (11) vorgesehen, der mit der elektrischen Versorgungsvorrichtung verbunden ist.

## Beschreibung

Die Erfindung betrifft eine Schutz- und Versorgungsvorrichtung für einen chemischen Reaktor, insbesondere im Labormaßstab. Ferner betrifft die Erfindung eine diese Schutzund Versorgungsvorrichtung umfassende Reaktorvorrichtung und ein damit aufbaubares modulares Prozesssystem.

Es bestehen gesetzliche Sicherheitsbestimmungen für elektrische Mess-, Steuer-, Regelund Laborgeräte, die in verschiedenen Normen festgelegt sind. So gibt es allgemeine Anforderungen an solche Geräte, aber auch jeweils besondere Anforderungen an spezifische Geräte, beispielsweise zum Mischen und Rühren, für das Erhitzen von Stoffen und die Lüftung, sowie besondere Anforderungen an Kühlgeräte und an automatische und semiautomatische Laborgeräte für Analysen und andere Zwecke. Weitere Sicherheitsbestimmungen betreffen beispielsweise eine Feuchtigkeitsvorbehandlung oder Anforderungen an Geräte, die entflammbare Flüssigkeiten enthalten oder nutzen, oder enthalten Spezifikationen zum Einbringen von Übertemperaturschutz.

Derartige Schutzmaßnahmen sind häufig im Bereich chemischer Synthesen und auch bei vielen photochemischen Prozessen erforderlich. Hierbei Ist bekannt, dass viele organische Synthesen besser oder überhaupt erst durch Bestrahlung mit elektromagnetischer Strahlung geeigneter Wellenlänge, insbesondere im UV-Welleniängenbereich, durchgeführt werden können. Vorteile der photochemischen Synthese liegen neben der hohen Selektivität auch in der Durchführbarkeit bei Raumtemperatur (im Gegensatz zur thermischen Anregung), sodass beispielsweise thermisch empfindliche Moleküle nicht zerstört werden und auch weniger Nebenprodukte entstehen.

Photochemische Prozesse finden breite Anwendung, beispielsweise in der Abwasseraufbereitung (Abbau halogen-organischer Verbindungen, etc.), Reinstwasserherstellung (Abbau von organischen Verunreinigungen) und Trinkwasseraufbereitung (Entkeimung und Abbau von Pestiziden) und der Getränke- und Lebensmittelindustrie, etwa zur Entkeimung oder Kaltreinigung von Proteinverunreinigungen.

In anderen Gebieten, insbesondere bei Anwendungen zur Synthese, umfassend Reaktionen wie beispielsweise Isomerisierung, Addition, Substitution und Polymerisation etc., ist bei der Herstellung der entsprechenden Apparaturen auf die Erfüllung der oben angesprochenen Laborgerätenormen zu achten. Weitere photochemische Laboranwendungen, die den festgelegten Sicherheitsanforderungen genügen müssen, umfassen beispielsweise die Analyse - etwa zur Bestimmung des TOC- (total organic carbon) Gehalts, Probenvorbereitungen, etwa bei der Schwermetallbestimmung, und Untersuchungen in der Pharma- und Kosmetikforschung (z. B. Untersuchung der Photostabilität).

Ausgehend von diesem Stand der Technik ist es Aufgabe der vorliegenden Erfindung, eine vielseitig einsetzbare Schutzvorrichtung bereitzustellen, die den Anforderungen entspricht und in der jegliche Art einer chemischen und insbesondere auch photochemischen Anwendung umgesetzt werden kann.

Diese Aufgabe wird durch eine Schutz- und Versorgungsvorrichtung mit den Merkmalen des Anspruchs 1 gelöst.

Ferner ist es Aufgabe der Erfindung, eine Vorrichtung zur Durchführung chemischer und insbesondere photochemischer Reaktionen bereitzustellen, die den obigen Anforderungen genügt.

Diese Aufgabe wird durch eine Reaktorvorrichtung mit den Merkmalen des Anspruchs 8 gelöst.

Eine weitere Aufgabe ist die Bereitstellung eines Prozessanlagensystems, das eine einfache und damit kostengünstigere Entwicklung eines neuen Prozesses oder Anpassung an verschiedene Prozesse bzw. Modifizierung eines bestehenden Prozesses erlaubt.

Diese Aufgabe wird durch ein modulares Prozesssystem mit den Merkmalen des Anspruchs 14 gelöst.

Bevorzugte Ausführungsformen sind in den jeweiligen Unteransprüchen ausgeführt.

Eine erfindungsgemäße Schutz- und Versorgungsvorrichtung für einen chemischen Reaktor wird durch ein Gehäuse gebildet, dessen Wände - zumindest die Seitenwände - doppelwandig ausgeführt sind, um eine Gehäusekühlung realisieren zu können, und die dazu einen oder mehrere Kühlmittelein- und -auslässe aufweisen. An einer Fläche des Gehäuses ist eine verschließbare Tür ausgebildet, die erlaubt, dass das Innere des Gehäuses für die Installation des vorgesehenen chemischen Reaktors gut zugänglich ist. In der Tür ist eine oder sind mehrere elektrische Versorgungsvorrichtung(en) aufgenommen, um ein elektrisches Gerät, das als Teil des chemischen Reaktors in dem Gehäuse angeordnet werden kann, zu versorgen. Die elektrische(n) Versorgungsvorrichtung(en) ist/sind mit zumindest einer Steckdose, die innen an der Tür angeordnet ist, und zumindest einem Schalter verbunden, der außen an der Tür zur Schaltung der Steckdose(n) angeordnet ist. Weiter ist ein Kontaktschalter zwischen der Tür und dem übrigen Gehäuse vorgesehen, der mit der elektrischen Versorgungsvorrichtung verbunden ist, sodass die elektrischen Geräte im Inneren des Gehäuses automatisch abgeschaltet werden, wenn die Tür während des Betriebs geöffnet wird.

Das Gehäuse kann kastenförmig sein; außerdem kann die verschließbare Tür an einer Seitenfläche des Gehäuses vorliegen. Bei einem kastenförmigen Gehäuse kann die Tür vorzugsweise in etwa die gesamte Seitenfläche einnehmen, sodass das Innere des Gehäuses für die Installation des vorgesehenen chemischen Reaktors gut zugänglich ist.

Die Schutz- und Versorgungsvorrichtung gestattet die Erfüllung der Laborgerätenormen und gestattet eine einfache Umsetzung verschiedener Anwendungen. Ferner wird nicht nur die Einhaltung aktueller Normen ermöglicht, die Schutz- und Versorgungsvorrichtung lässt - insbesondere auch durch die weiteren Merkmale - eine einfache Anpassung an künftige Änderungen der Laborgerätenormen zu.

Vorteilhaft kann die elektrische Versorgungsvorrichtung zumindest ein Netzteil und/oder ein Vorschaltgerät umfassen, mit dem eine Spannung, die an jeder der Steckdosen bereitgestellt wird, eingestellt werden kann. Liegen zwei oder mehr Steckdosen vor, können auch unterschiedliche Spannungen bereitgestellt werden. Die unterschiedlichen Spannungen können fest eingestellt sein, es kann aber auch ein Spannungsregler vorgesehen sein, der eine variable Einstellung an einer oder allen Steckdosen ermöglicht.

Außer der Tür kann das Gehäuse der Schutz- und Versorgungsvorrichtung an einer zu der Tür benachbarten Wand, die vorzugsweise die Decke des (kastenförmigen) Gehäuses sein kann, einen verschließbaren Deckel aufweisen, um einen weiteren Zugang ins Innere des Gehäuses zu ermöglichen, sodass die Installation und Wartung des chemischen Reaktors und des entsprechenden Zubehöres im Inneren des Gehäuses erleichtert wird. Hierzu kann der Deckel vorzugsweise mit Rastscharnieren am übrigen Gehäuse angelenkt sein. Auch zwischen dem Deckel und dem übrigen Gehäuse kann ein Kontaktschalter vorgesehen sein. Hierbei kann es sich um den Kontaktschalter handeln, der der Tür zugeordnet ist; es kann aber auch ein weiterer Kontaktschalter eingesetzt werden, der mit der elektrischen Versorgungsvorrichtung verbunden ist, um die elektrischen Geräte bei Öffnen des Deckels während des Betriebs stromlos zu schalten.

Ferner kann das Gehäuse in zumindest einer der Wände eine oder mehrere Gehäuselücke(n) aufweisen, die jeweils durch ein Slotblech bzw. eine Slotblende verschlossen ist/sind, um an diesen Stellen verschiedene Anschlüsse realisieren zu können. Vorzugsweise können diese durch Slotbleche verschlossenen Gehäuselücken an der Gehäusedecke neben dem Deckel vorgesehen sein. Dabei kann zumindest eines der Slotbleche eine integrierte Buchse zum Anschluss eines Kabels aufweisen, etwa eines Lampenkabels, um den Anschluss eines in dem Gehäuse angeordneten Geräts, beispielsweise einer UV-Lampe, an einem speziellen Vorschaltgerät zu ermöglichen, das nicht innerhalb des Gehäuses bzw. innerhalb der Gehäusetür angeordnet werden kann. Ferner kann beispielsweise ein Lüfter an einem mit Lüftungsöffnungen versehenen Slotblech vorinstalliert sein, sodass der Lüfter bei Bedarf schnell und einfach in das Gehäuse integriert werden kann.

Eine erfindungsgemäße Schutz- und Versorgungsvorrichtung kann weiterhin die lichtdichte Ausführung des Gehäuses vorsehen, sodass auch photochemische Anwendungen, die einen Schutz des Laborpersonals vor der verwendeten Strahlung erforderlich machen, oder Anwendungen, die den Einfall von Tages- und Umgebungslicht vermeiden müssen, im Inneren implementiert werden können. Die lichtdichte Ausführung betrifft vor allem das Material des Gehäuses und eine spaltfreie Konstruktion desselben; insbesondere in Bezug auf Tür- und Türblattgestaltung. Das Material des Gehäuses kann z. B. inertes Metallmaterial wie Edelstahl sein, ggf. kommen auch photostabile Kunststoffmaterialien in Frage.

Um trotz der lichtdichten Ausführung Einblick ins Gehäuseinnere zu gestatten, kann in der Tür oder gegebenenfalls aber auch in einer anderen Wand des Gehäuses ein Fenster mit einer Filterscheibe vorgesehen sein, sodass keine schädliche Strahlung austreten bzw. störendes Umgebungslicht einfallen kann. Das Fenster kann vorzugsweise derart gestaltet sein, dass die Filterscheibe einfach austauschbar ist. So kann für unterschiedliche Anwendungen eine passende Filterscheibe gewählt werden - gegebenenfalls kann das Gehäuse durch Einsatz einer opaken Scheibe in dem Fenster auch wieder komplett strahlungsundurchlässig gemacht werden.

Um die Zu- und/oder Abfuhr von Prozessmedien zu dem im Inneren des Gehäuses vorgesehenen chemischen Reaktor zu ermöglichen, kann zumindest eine Wand Schlauchund/oder Kabeldurchführungen aufweisen. So können beispielsweise Prozessschläuche, die den chemischen Reaktor mit Edukt versorgen, oder Sensorkabel, die zu einem außerhalb der Schutz- und Versorgungsvorrichtung platzierten Messgerät führen, angeschlossen werden. Hierbei können auch diese Durchführungen lichtdicht, gegebenenfalls auch flüssigkeits- oder gasdicht, ausgeführt sein.

Außerdem kann das Gehäuse der Schutz- und Versorgungsvorrichtung Trägerelemente zur Aufnahme von Baugruppenträgern bzw. Racks für verschiedene austauschbare Vorschaltgeräte, Sensoren, Messgeräte, Automatisierungssysteme aufweisen, sodass ein Gehäuse anstelle des chemischen Reaktors die für diesen Reaktor erforderlichen Geräte wie beispielsweise die spezielle Vorschaltgeräte, Spektrometer, Computer mit SPS Software, Touch Panels, Anzeigevorrichtungen, etc. in Baugruppenträgern modular aufnehmen kann und direkt neben einem erfindungsgemäßen Gehäuse, in dem ein chemischer Reaktor aufgenommen ist, angeordnet werden kann.

Zur Befestigung des Reaktors, dessen Zubehörs oder anderer Geräte im Inneren der Schutz- und Versorgungsvorrichtung können im Inneren des Gehäuses Aufnahmevorrichtungen vorgesehen sein, die vorzugsweise die austauschbare Anordnung verschiedener Stativstangen ermöglichen. Es können auch unterschiedliche Aufnahmevorrichtungen vorgesehen sein, die z. B. unterschiedliche Haltevorrichtungen aufnehmen können. Aufnahmevorrichtungen können in einfachster Weise lediglich Aufnahmeöffnungen in Boden, Wand und Decke sein, sie können allerdings auch in einem Rahmen ausgebildet sein, dessen Abmessungen dem Gehäuseinneren entsprechen, sodass der Rahmen bei Anordnung im Gehäuse an dessen Innenwänden anliegt. Derartige Aufnahmevorrichtungen sind zumindest an einer von der Tür beabstandeten Seite des Gehäuses vorgesehen, um den Reaktor etc. an dieser "Rückwand" befestigen zu können. Es können aber auch Aufnahmevorrichtungen benachbart zu der Tür oder an anderen Stellen im Inneren des Gehäuses vorgesehen sein - auch ist es beispielsweise möglich, eine zusätzliche Aufnahmevorrichtung mittels eines Slotblechs in das Gehäuse zu integrieren.

Um im Inneren des Gehäuses einen Unterdruck zu erzeugen, der ein Entweichen schädlicher Stoffe aus dem Gehäuse in die Umgebung verhindert oder zumindest minimiert, kann die Schutz- und Versorgungsvorrichtung eine Ventilationsvorrichtung und einen Druckschalter aufweisen, der mit der Ventilationsvorrichtung verbunden ist. Ferner kann in der Tür ein Lüfter vorgesehen sein, der mit einer außen an der Tür eingebrachten Lüfteröffnung verbunden ist, um einen Überdruck an der zumindest einen elektrischen Versorgungsvorrichtung in der Tür bereitzustellen, sodass keine korrosiven oder entzündlichen Stoffe an die Elektronik gelangen können.

Ein weiterer erfindungsgemäßer Gegenstand ist eine Reaktorvorrichtung, die einen chemischen Reaktor umfasst, der in einer erfindungsgemäßen Schutz- und Versorgungsvorrichtung angeordnet ist und zumindest elektrisch - vorzugsweise aber auch steuerungs/regelungstechnisch, sensorisch und prozesstechnisch/stofflich - durch die Schutz- und Versorgungsvorrichtung versorgt wird.

In einer bevorzugten Ausführungsform der Reaktorvorrichtung kann der chemische Reaktor, der in der Schutz- und Versorgungsvorrichtung angeordnet ist, ein photochemischer Reaktor bzw. Photoreaktor sein; es kann sich aber auch um einen Mikroreaktor oder eine Apparatur zur Substratbestrahlung handeln. Ein Photoreaktor weist zumindest eine Strahlungsquelle auf, die üblicherweise in einem Hüllrohr angeordnet ist, das zumindest für einen vorbestimmten, für die photochemische Reaktion relevanten Wellenlängenbereich der von der Strahlungsquelle emittierten Strahlung transparent ist. Dieses Hüllrohr kann in einem zweiten Hüllrohr, vorzugsweise koaxial, angeordnet sein, sodass je nach Durchmesserunterschied der beiden Hüllrohre zumindest ein Spalt zwischen beiden Hüllrohren verbleibt. Dieses Volumen kann bereits als photochemisches Reaktorvolumen genutzt werden, es kann allerdings auch zur Strahlerkühlung genutzt werden, sodass auch das Material dieses Hüllrohrs für den vorbestimmten Wellenlängenbereich transparent zu wählen ist und der Reaktionsraum durch ein weiteres Hüllrohr gebildet wird, das um das zweite Hüllrohr, ebenfalls bevorzugt koaxial, angeordnet ist. Das Reaktorvolumen wird durch den Durchmesserunterschied beider Hüllrohre bestimmt

Zur Ein- und Ausleitung eines Prozessmediums wie eines Kühlmediums zur Kühlung des Strahlers oder eines Reaktionsmediums in das Reaktorvolumen können in dem zweiten bzw. dritten Hüllrohr entsprechende Anschlussstutzen am oberen offenen Ende des Hüllrohrs vorgesehen sein. Die Zu- und Ableitungen für die Prozessmedien werden durch entsprechende Vorrichtungen (z. B. der lichtdichten Durchtritte) der Schulz- und Versorgungsvorrichtung geführt und können so mit einer außerhalb der Schutz- und Versorgungsvorrichtung vorliegenden Prozessmedienquelle verbunden werden.

Zur Kühlung kann durch den Spalt zwischen ersten und zweiten Hüllrohr beispielsweise Luft, Wasser, Argon oder Stickstoff geleitet werden. Die Wahl des Kühlmediums hängt wie die Wahl des Hüllrohrmaterials von der zu transmittierenden Wellenlänge ab - so ist beispielsweise, wenn UV-Strahlung unterhalb 300 nm genutzt werden soll, der Einsatz von Luft als Kühlmedium nicht geeignet, da hier Strahlung durch Sauerstoffmoleküle absorbiert wird und zu Ozonbildung führt. Für Strahlung unterhalb 200 nm eignen sich Argon oder Stickstoff als Kühlmedium, da diese Strahlung auch durch Wassermoleküle absorbiert wird. Ferner ist für diese Wellenlängen unter 300 nm und vor allem unter 200 nm der Einsatz von synthetischen Quarzglas als Hüllrohrmaterial empfehlenswert bzw. erforderlich, da nur dieses Material eine entsprechende Transparenz aufweist, während oberhalb 300 nm natürliches Quarzglas ein geeignetes und günstigeres Hüllrohrmaterial für viele UV-Anwendungen ist.

Zur einfachen Anordnung der Hüllrohre bei der Montage oder Wartung des photochemischen Reaktors werden zwei benachbarte, Ineinander angeordnete Hüllrohre, bei denen das jeweils innere Hüllrohr über ein oberes offenes Ende des jeweils äußeren Hüllrohrs herausragt, jeweils mit einer bestimmten Verschraubungsanordnung abdichtend verbunden. Diese Verschraubungsanordnung weist einen um das jeweils äußere Hüllrohr angeordneten Innenring mit Außengewinde und eine um das jeweils innere Hüllrohr angeordnete Überwurfmutter mit Innengewinde auf, die so dimensioniert ist, dass ihr Innengewinde mit dem Außengewinde das Innenrings in Eingriff tritt. Zwischen dem Innenring und der Überwurfmutter sind ein Zentrierring und Dichtmittel, beispielsweise O-Ringe, zur Abdichtung des Innenrings am jeweils äußeren Hüllrohr und der Überwurfmutter am inneren Hüllrohr vorgesehen. Der Innenring kann aus Messing sein, der Zentrierring aus Teflon oder einem anderen chemisch beständigen Material. Der Innenring kann ferner zur Sicherstellung der Kraftübertragung mit Feingewinde ausgeführt sein.

Diese Verschraubungsanordnung zur Verbindung zweier Hüllrohre gestattet einen schnellen Wechsel auf unterschiedliche Reaktoren und Strahlenquellen, die in einer Schutz- und Versorgungsvorrichtung angeordnet werden. Ebenso ist durch das zerlegbare Hüllrohrsystem eine CIP-Reinigung ("Cleaning in Place") möglich.

Ferner kann der Photoreaktor eine höhenverstellbare Strahlerhalterung für die Strahlungsquelle aufweisen, sodass die Montagehöhe unterschiedlicher Strahler in verschiedenen Reaktoren in der Schutz- und Versorgungsvorrichtung einfach angepasst werden kann. Diese Strahlerhalterung hat ein Kopfteil und einen Verstellkörper, der Durchbohrungen für das Gestänge aufweist. Die Durchbohrungen sind zumindest an einem Ende mit einem Gewinde ausgebildet, in die Gewindestäbe, die mit dem Kopfteil verbunden sind, austauschbar aufgenommen sind, sodass Gewindestäbe unterschiedlicher Länge zum Einsatz kommen können. Am anderen Ende der Durchbohrungen ist jeweils eine hochspannungsfeste Anschlussbuchse aufgenommen, die ebenfalls über ein Gewinde in die Durchbohrung eingeschraubt sein kann. In den Anschlussbuchsen ist ein Strahlergestänge, das die Strahlungsquelle kontaktiert, verschiebbar aufgenommen, wobei das Strahlergestänge die Gewindestäbe unmittelbar innerhalb des Verstellkörpers oder mittelbar über die Anschlussbuchse und/oder den Verstellkörper kontaktiert.

In einer Ausführungsform können die Gewindestäbe hohl sein, sodass das Strahlergestänge auch in den Gewindestäben verschiebbar aufgenommen sein kann.

In einer weiteren Ausführungsform einer erfindungsgemäßen Reaktorvorrichtung kann der Photoreaktor eine oder mehrere Messstellen für eine online UV-/Lichtmessung aufweisen, die mit einer Messwerteverarbeitungs- und/oder Anzeigeeinrichtung in Verbindung stehen, von denen zumindest die Anzeigeeinrichtung außen an oder außerhalb der Schutz- und Versorgungsvorrichtung vorgesehen ist, Die Messwerteverarbeitungseinrichtung kann dabei auch mit einer Regelung bzw. Steuerung der Strahlungsquelle verbunden sein.

Schließlich weist ein erfindungsgemäßes Prozesssystem zumindest zwei erfindungsgemäße Reaktorvorrichtungen auf, die parallel oder sequentiell geschaltet sind. Bei mehr als zwei Reaktorvorrichtungen können diese auch parallel und sequentiell miteinander verbunden sein. Dabei sind die in den Schutz- und Versorgungsvorrichtung angeordneten Reaktoren prozesstechnisch über die Einrichtungen der Schutz- und Versorgungsvorrichtungen miteinander verbunden oder verbindbar.

Vorzugsweise ist zumindest einer der Reaktoren eines erfindungsgemäßen Prozesssystems ein Photoreaktor.

Die Reaktorvorrichtungen, mit denen photochemische Prozesse oder weitere Prozesse wie Mischen, Rühren, Erhitzen, Kühlen, etc. durchgeführt werden, und Prozesssysteme, bei denen die entsprechenden Prozesse miteinander verknüpft werden, können durch den modularen Aufbau einfach und kostengünstig umgesetzt und miteinander verbunden und bei Bedarf modifiziert werden.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Frontansicht auf die Türseite einer erfindungsgemäßen Schutz- und Versorgungsvorrichtung,
- **Fig. 2**: eine Seitenansicht der Schutz- und Versorgungsvorrichtung aus Fig. 1,
- **Fig. 3**: eine Draufsicht auf die Schutz- und Versorgungsvorrichtung aus Fig. 1,
- **Fig. 4**: eine perspektivische Frontansicht auf ein Prozesssystem aus zwei Reaktorvorrichtungen, wobei in den Schutz- und Versorgungsvorrichtungen jeweils ein Rührreaktor und ein Photoreaktor angeordnet sind,
- **Fig. 5**: eine perspektivische Seitenansicht einer Strahlerhalterung einer erfindungsgemäßen Ausführungsform einer Reaktorvorrichtung,
- **Fig. 6**: eine Detailansicht des Verstellkörpers der Strahlerhalterung aus Fig. 5,
- **Fig. 7**: eine Seitenansicht auf eine Hüllrohranordnung einer erfindungsgemäßen Ausführungsform einer Reaktorvorrichtung,
- **Fig. 8**: eine Längsschnittansicht durch die Hüllrohranordnung aus Fig. 7 längs A-A,
- **Fig. 9**: eine Schnittansicht des Details B aus Fig. 8, die einen Ausschnitt der Verschraubungsanordnung zeigt,
- **Fig. 10**: eine schematische Schnittansicht der Schutz- und Versorgungsvorrichtung durch Schnittlinie AA aus Fig. 3,
- **Fig.11**: eine schematische Frontansicht einer Schutz- und Versorgungsvorrichtung, die zur Aufnahme von Baugruppen ausgeführt ist.

Die erfindungsgemäße Schutz- und Versorgungsvorrichtung gestattet in einfacher und ökonomischer Art die Einhaltung gesetzlicher Sicherheitsanforderungen an Laborgeräte und ermöglicht gleichzeitig einen variablen Einsatz für verschiedene Anwendungen.

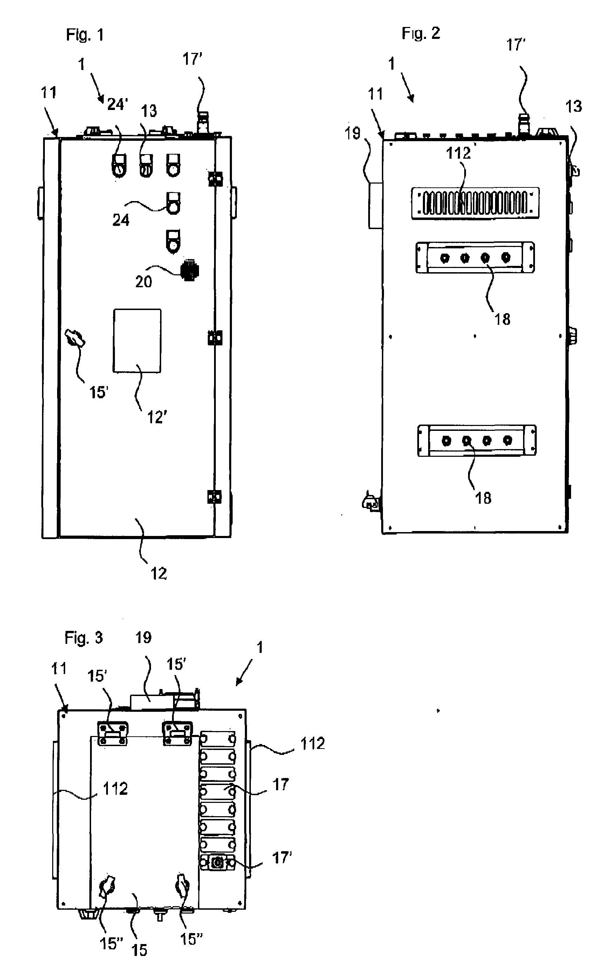

Figuren 1 bis 3 zeigen eine erfindungsgemäße Schutz- und Versorgungsvorrichtung 1, die im vorliegenden Beispiel durch ein kastenförmiges Gehäuse 11 gebildet wird. Diese Form kann aufgrund der einfachen Bauweise eine bevorzugte Form darstellen; es ist aber nicht ausgeschlossen, dass eine davon abweichende Form des Gehäuses gewählt werden kann. So sind beispielsweise auch abgerundete Formen bis hin zur Zylinderform oder Gehäuse mit polygonaler Grundfläche denkbar.

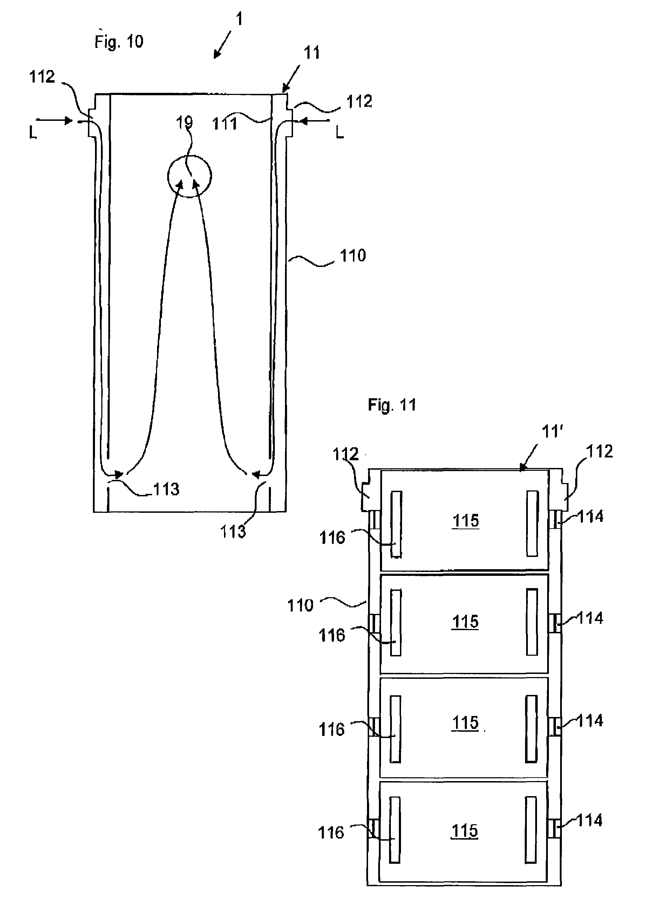

Um eine Gehäusekühlung zu realisieren, ist das Gehäuse 11 doppelwandig ausgeführt, wobei eine Kühlung durch ein Kühlmittel, wie beispielsweise Luft oder ein Kühlfluid, erfolgen kann, die bzw. das von einem Einlass durch die Doppelwand bis zu einem Auslass geleitet wird. Fig. 10 zeigt beispielhaft eine mögliche Ausführungsform zur Kühlung der Schutz- und Versorgungsvorrichtung 1 mittels eines Luftstroms L. Durch Lüftungsgitter als Lufteinlass 112 in der Außenwand 110 gelangt der Luftstrom L in die Doppelwand und tritt durch Lüftungsgitter als Luftauslass 113 in der Innenwand 111 ins Innere der Schutzund Versorgungsvorrichtung 1 aus. Der Luftstrom L wird durch die an der hinteren Doppelwandung angeordnete Ventilationsvorrichtung 19 erzeugt, durch den der Luftstrom L dann auch wieder aus dem Gehäuse 11 in die Umgebung austritt. In dem gezeigten Beispiel sind die Lufteinlässe 112 oben an der Gehäuseaußenwand 110 und die Lufteinlässe 113 unten an der Gehäuseinnenwand 111 angeordnet - die Ventilationsvorrichtung 19 wiederum oben in der hinteren Doppelwandung, sodass der Luftstrom L die Doppelwand und das Innere des Gehäuses möglichst vollständig passiert. Selbstverständlich ist die räumliche Anordnung der Lufteinlassöffnungen und -auslassöffnungen sowie der Ventilationsvorrichtung nicht auf das gezeigte Beispiel beschränkt. Ferner ist denkbar, dass Luftleitvorrichtungen wie zum Beispiel Umlenkbleche eingesetzt werden können, um den Luftstrom in bestimmter Weise durch die Doppelwand oder insbesondere durch das Innere der Schutz- und Versorgungsvorrichtung 1 zu lenken, um eine bestmögliche Kühlwirkung zu erzielen. Anstelle eines Luftstroms kann auch ein Inertgasstrom zur Kühlung des Gehäuses eingesetzt werden, anstelle der Lüftungsgitter können dann entsprechende Inertgasanschlüsse zur Zu- und Abfuhr vorgesehen sein.

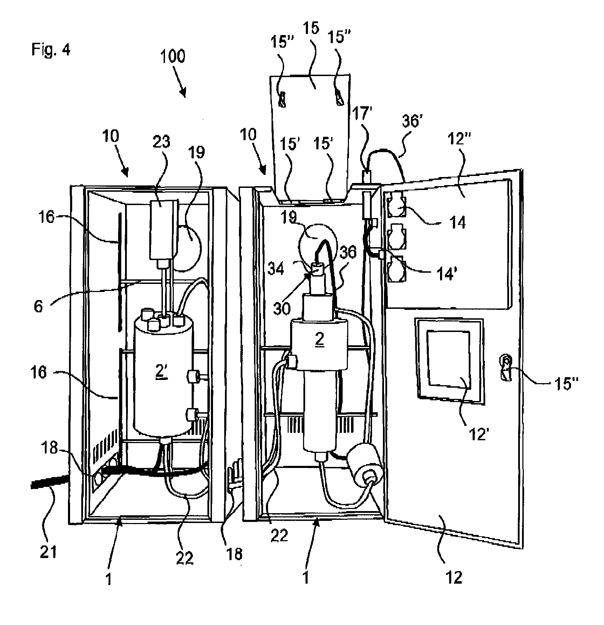

Wie in **Fig.** 1 zu sehen ist, ist eine Seite des kastenförmigen Gehäuses 11 als verschließbare Tür 12 ausgeführt, um so Zugang ins Innere des Gehäuses 11 zu gestatten, um einen Reaktor darin aufzubauen, entsprechende Geräte, Schläuche, Netz- und Sensorkabel anzubringen etc. bzw. um- oder abzubauen. Ferner ermöglicht ein verschließbarer Deckel 15 in der Decke des kastenförmigen Gehäuses 11 ebenfalls Zugang zum Inneren der Schutz- und Versorgungsvorrichtung 1, um Auf-, Um- oder Abbau des darin untergebrachten Reaktors zu erleichtern. Darüber hinaus können sowohl Hüllrohre als auch Strahler eines Photoreaktors durch den geöffneten Deckel 15 entnommen werden, ohne dass das Reaktorgefäß zuvor ausgebaut werden muss. Zudem kann der Deckel 15 an der Decke des Gehäuses 11, wie in **Fig.** 3 gezeigt ist, mit selbsthaltenden Rastscharnieren 15' versehen sein, sodass der aufgeklappte Deckel 15 (siehe Fig. 4) nicht von selbst zufällt.

In der Tür 12, d. h. hinter einem innen an der Tür 12 angebrachten Türkasten 12" (zu sehen in **Fig**. 4) ist eine elektrische Versorgungsvorrichtung, beispielsweise ein oder mehrere Netzteile oder Vorschaltgeräte, aufgenommen, die mit den auf dem Türkasten 12" angebrachten Steckdosen 14 verbunden ist/sind, um in dem Gehäuse 11 angeordnete Geräte elektrisch versorgen zu können. Die somit innen an der Tür 12 angebrachten Steckdosen 14, und damit die über einen Stecker damit verbundenen, in der Schutz- und Versorgungsvorrichtung 1 angeordnete Geräte wie z.B. Magnetrührtische, Pumpen, etc., können so bei geschlossener Tür 12 von außen mittels eines Schalters 13 (siehe **Fig.** 1 oder 2) geschaltet, d. h. aktiviert und desaktiviert werden. Ferner können außen an der Tür 12 verschiedene Kontrollleuchten 24 angebracht sein, die das Funktionieren der im Inneren betriebenen Geräte signalisieren - eine Alarmleuchte 24' kann von den Kontrollleuchten 24 distanziert positioniert sein und sich farblich unterscheiden.

Es kann vorgesehen sein, dass die Netzteile bzw. Vorschaltgeräte im Türkasten 12" unterschiedliche Spannungen an den Steckdosen 14 bereitstellen können. Dies kann durch Einstellung einer gewünschten Spannung an jeder Steckdose 14 durch einen Spannungsregler erfolgen, oder jede Steckdose 14 ist mit einem bestimmten Netzteil zur Bereitstellung einer bestimmten Spannung verbunden. Hierzu können in der Tür 12 beispielsweise Netzteile zur Versorgung eines modularen Racks mit 230V, 24V, 12V und 5V integriert sein. Als modulare Racks können beispielsweise Sensoren, Vorschaltgeräte, Pumpen, sowie weitere diverse Geräte angeschlossen werden, die zur Infrastruktur des Komplettsystems benötigt werden.

Tür 12 und Deckel 15 des Gehäuses 11 können durch einen Kontaktschalter, der im Türblatt verbaut und mit der elektrischen Versorgungsvorrichtung verbunden ist, gleichzeitig abgesichert sein, sodass ein öffnen der Tür 12 oder des Deckels 15 während des Betriebs zu einer Abschaltung der elektrischen Geräte führt, die an den Steckdosen 14 angeschlossen sind odersich in einem separaten Gehäuse 11' befinden (siehe Fig. 11), das zur Aufnahme verschiedener elektrischer Geräte bzw. Einschubracks ausgebildet ist. Gegebenenfalls kann aber auch jeweils ein Kontaktschalter für Deckel 15 und die Tür 12 vorgesehen sein.

Um an den in der Schutz- und Versorgungsvorrichtung 1 angeordneten chemischen Reaktoren 2,2' (siehe **Fig.** 4) Prozessschläuche 22 und Kabel 21 - z. B. für Sensoren - anzuschließen, die von oder nach außerhalb des Gehäuses 11 kommen oder führen, sind in der Gehäusewand Durchführungen 18 vorgesehen, die in **Fig.** 2 und Fig. 4 zu sehen sind. Die Durchführungen 18 können abgedichtet sein, etwa durch Schottverschraubungen, sodass insbesondere bei photochemischen Anwendungen ein Lichtaustritt verhindert oder bei photosensiblen Anwendungen ein Lichteintritt wird. Vorzugsweise können, wie in **Fig.** 2 zu sehen, mehrere Reihen von Durchführungen 18 in verschiedenen Höhen am Gehäuse 11 vorgesehen sein, um eine optimale Kabel- und Schlauchführung im Inneren des Gehäuses zu ermöglichen. Die Durchführungen 18 können zwar, wie in Fig. 4 gezeigt, in Bodennähe angebracht sein, es kann jedoch vorteilhafter sein, die Durchführungen 18 etwas vom Boden zu distanzieren, wie im Beispiel der Fig. **2**, sodass die durchgeführten Kabel bzw. Schläuche nicht auf dem Gehäuseboden zu liegen kommen.

Weiter kann das Gehäuse 11 zur Integration von Baugruppenträgern oder Einschubracks ausgebildet sein, die je nach Bedarf und Anwendung austauschbar sind. Als Einschubracks können z. B. Vorschaltgeräte, Sensoren, Messgeräte und Automatisierungssysteme vorliegen. Das in Fig. 11 gezeigte Gehäuse 11' besteht in diesem Ausführungsbeispiel aus einer Außenwand 110, von der sich nach innen Trägerelemente 114 erstrecken, sodass verschiedene Baugruppenträger 115 in dem Gehäuse 11' aufgenommen und mit den entsprechenden Geräten in einer benachbarten Schutz- und Versorgungsvorrichtung 1 verbunden werden können. Die Baugruppenträger 115 können mit Griffen 116 zur besseren Handhabung ausgestattet sein. So können die erforderlichen Baugruppen wie spezielle Vorschaltgeräte für Strahler, Steuerungs- und/oder Sensorelektronik sowie Eingabe- und Anzeigevorrichtungen modular und einfach austauschbar in einem Gehäuse 11' benachbart zu den jeweiligen Reaktorvorrichtungen 10 eines erfindungsgemäßen Prozesssystems 100 angeordnet werden.

Zur Aufnahme solcher Baugruppenträger können Gehäuselücken vorgesehen sein, die bei Nichtbenutzung mit einfachen Slotblechen 17 verschlossen werden. Solche Slotbleche 17 können, wie in **Fig. 1 bis** 3 dargestellt, in der Gehäusedecke neben dem Deckel 15 eingebracht sein. Alternativ oder zusätzlich können aber auch in einer Gehäuseseitenoder Rückwand mit Slotbiechen verschlossene Gehäuselücken vorgesehen sein.

ist die Anordnung eines Photoreaktors 2 im Inneren der Schutz- und Versorgungsvorrichtung 1 vorgesehen, wie in der rechten Schutz- und Versorgungsvorrichtung 1 in Fig. 4 zu sehen, so kann ein Lampenanschlusskabel 36' von einem Lampenvorschaltgerät, das hier nicht dargestellt ist und aus Sicherheitsgründen außerhalb der Schutz- und Versorgungsvorrichtung 1 angeordnet ist, am kastenförmige Gehäuse 11 über eine in einem Slotblech 17 integrierte Buchse 17' (siehe auch **Fig.** 1 bis 3) am Gehäuse 11 befestigt werden.

Der von der Strahlerhalterung 30 gehaltene Strahler wird somit über das Kopfteil 34 und ein Lampenanschlusskabel 36 innerhalb des Gehäuses 11 angeschlossen. Das Lampenkabel ist exakt so codiert, dass nur das passende Lampenanschlusskabel an dem Vorschaltgerät und am Kopfteil angeschlossen werden kann. Während des Betriebes kann das Kabel 36 nicht versehentlich getrennt werden und damit sind Spannungsüberschläge durch Fehlbedienung ausgeschlossen. Sobald die Tür 12 oder der Deckel 15 des Gehäuses 11 geöffnet wird, werden alle angeschlossenen elektrischen Geräte, auch die speziellen Vorschaltgeräte, die neben dem Schutzschrank positioniert oder in einem Aufnahmegehäuse eingeschoben sind, durch den Kontaktschalter stromlos geschaltet, da für die speziellen Vorschaltgeräte die Kabelführung vom Netzstecker in der Tür in der Schutzund Versorgungsvorrichtung nach außen verläuft. D. h., der elektrische Anschluss des Netzsteckers des speziellen Vorschaltgeräts, das außerhalb der Schutz- und Versorgungsvorrichtung - gegebenenfalls als Einschubrack in einem separaten Gehäuse - angeordnet Ist, erfolgt in der Tür der Schutz- und Versorgungsvorrichtung und wird von außen geschaltet, wobei das Kabel zur Stromversorgung zwischen Innen- und Außenwand in den unteren Bereich des Gehäuses geführt und von dort aus dem Gehäuse herausgeführt wird.

Für die einfache und variable Anpassbarkeit weist die Schutz- und Versorgungsvorrichtung 1 ferner im Inneren des Gehäuses 11 stabile Aufnahmevorrichtungen 16, die rahmenartig in der Innenwand des Gehäuses 11 bereitgestellt sein können, für austauschbare Stativstangen 6 auf, um Reaktoren 2,2' oder anderer Geräte im Inneren der Schutzund Versorgungsvorrichtung 1 befestigen zu können. Wie in Fig. 4 zu sehen, kann ein solcher Gehäuserahmen 16 an der von der Tür 12 abgewandten Seite der Seitenwände vorgesehen sein - es sind aber auch noch alternativ platzierte oder zusätzlich eingebrachte Gehäuserahmen denkbar, je nach vorgesehener Reaktor- bzw. Geräteanordnung.

Um im Inneren des Gehäuses 11 Unterdruck sicherzustellen, damit es bei Leckagen nicht zu einer Gefährdung der Umgebung etwa durch eine zu hohe Lösungsmiltelkonzentration kommen kann, ist ein integrierter Druckschalter vorgesehen, der mit einer entsprechenden Ventilationsvorrichtung 19 verbunden ist.

Eine weitere Schutzeinrichtung ist ein in der Tür vorgesehener Lüfter, der mit einer außen an der Tür 12 eingebrachten Lüfteröffnung 20 verbunden ist und der einen geringen Überdruck im Elektronikbereich im Türkasten 12" erzeugt, sodass ein Eindringen von korrosiven Gasen verhindert und die elektronischen Bauteile geschützt sind.

Gerade was photochemische oder photosensible Anwendungen betrifft, erleichtert die doppelwandige Ausführung des Gehäuses 11 der Schutz- und Versorgungsvorrichtung 1 die konstruktive Umsetzung eines lichtdichten Schutzgehäuses. In der Tür 12 kann ein Fenster 12' vorgesehen sein, dessen Fensterscheibe als austauschbar ausgeführt sein kann, um Filterscheiben mit unterschiedlichen Filterstufen als Fensterscheibe einsetzen zu können, die auf die Wellenlänge/Intensität des eingesetzten Strahlers abgestimmt sind. Falls erwünscht kann die Fensterscheibe auch durch eine vollständig lichtdichte Scheibe ersetzt werden.

**Fig.** 4 zeigt zwei erfindungsgemäße Reaktorvorrichtungen 10, die zu einem erfindungsgemäßen Prozesssystem 100 verbunden sind. Der Übersichtlichkeit wegen sind die Tür sowie der klappbare Deckel an dem linken Gehäuse 11, sowie das spezielle Vorschaltgerät für den Strahler, das außerhalb der Schutz- und Versorgungsvorrichtung 1, gegebenenfalls als Einschubrack in einem Gehäuse 11', wie in **Fig.11** gezeigt, angeordnet ist, weggelassen. Jede Reaktorvorrichtung 10 weist in einer Schutz- und Versorgungsvorrichtung 1 einen chemischen Reaktor 2,2' auf. Im vorliegenden Beispiel ist dies links ein Rührreaktor 2' (oder ein Vorlagegefäß, gegebenenfalls mit einem Rührwerk) und rechts ein Photoreaktor 2, um eine Prozessfolge mit den Schritten Rühren/Mischen, gefolgt von einer photochemischen Stufe zu realisieren. Dabei wird das Rührwerk 23 des Rührreaktors 2 und der Strahler über die Strahlerhalterung 30 und das Kabel 36 über verschiedene Einrichtungen der jeweiligen Schutz- und Versorgungsvorrichtung 1 elektrisch versorgt. Auch die steuerungs- bzw. regelungslechnische, sensorische und prozesstechnischstoffliche Anbindung erfolgt über Schnittstellen der Schutz- und Versorgungsvorrichtung 1. In Fig. 4 ist hierzu beispielsweise zu sehen, wie Schläuche 22 von dem Rührreaktor 2' zum Photoreaktor 2 durch die Durchtritte 18 der Wände der jeweiligen Gehäuse 11 geführt werden. Zur Aufstellung der Schutz- und Versorgungsvorrichtungen 1 können die Gehäuse höhenverstellbare Füße aufweisen.

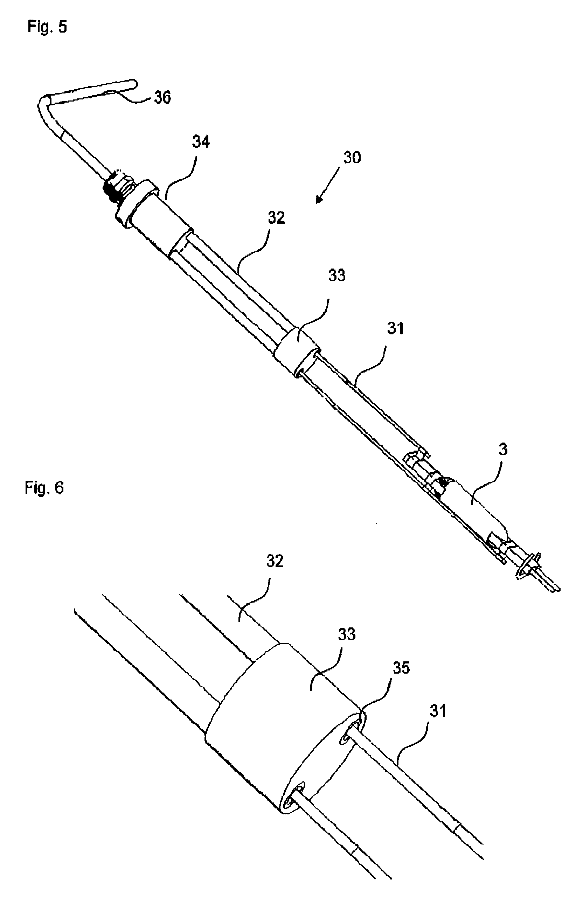

Fig. 5 und 6 zeigen eine Strahlerhalterung 30 mit Strahlungsquelle 3 und im Detail den Verstellkörper 33, mit dem eine Höhenverstellung der Strahlungsquelle 3 ermöglicht wird. So kann die Strahlungsquelle 3 bei verschiedenen Reaktordesigns optimal positioniert werden, ohne jedes Mal eine neue Strahlerhalterung bzw. ein neues Gestänge anfertigen zu müssen. Der Verstellkörper 33 hat zwei Durchbohrungen, die einenends ein Gewinde aufweisen, in denen die Gewindestäbe 32 aufgenommen sind, die sich von einem Kopfteil 34 der Strahlerhalterung 30, an dem das Kabel 36 angeschlossen ist, erstrecken. Auf der anderen Seite des Verstellkörpers 33 sind Anschlussbuchsen 35, die ein Außengewinde aufweisen können, in die Durchbohrungen eingebracht, in denen das Gestänge 31, das die Strahlungsquelle 3 kontaktiert, verschiebbar aufgenommen ist, sodass das Gestänge 31 in den hohlen Gewindestäben 32 verschiebbar ist. Durch aufschraubbare Verlängerungen, wobei es sich je nach Strahlertyp um Gewindestäbe oder um Rohre mit Gewinde als Hohlkörper handeln kann, kann die Strahlerhalterung 30 nahezu beliebig verlängert werden.

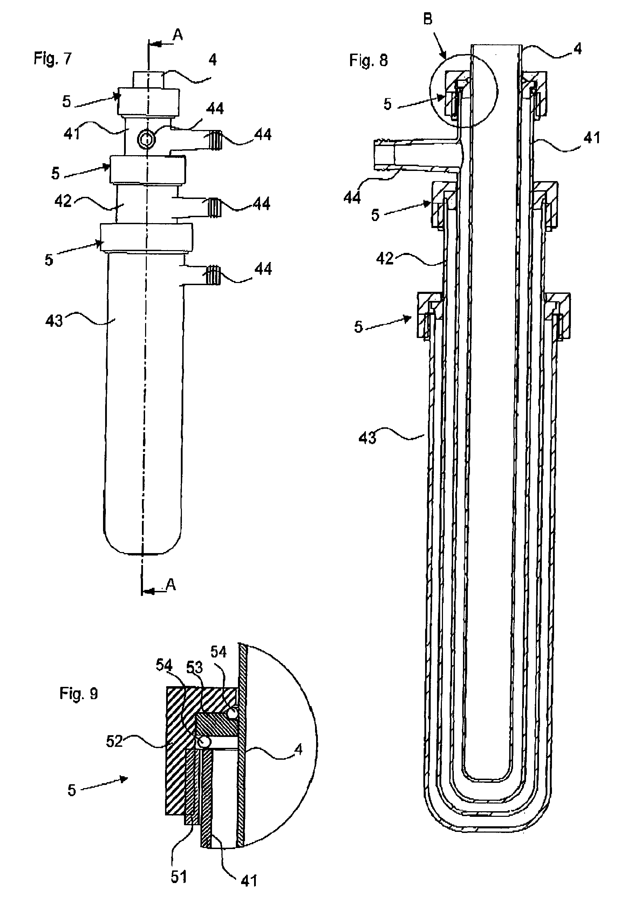

Fig. 7 bis 9 zeigen einen erfindungsgemäß aufgebauten Photoreaktor 2, der aus mehreren koaxial ineinander angeordneten Hüllrohren 4,41,42,43 besteht, die jeweils über eine Verschraubungsanordnung 5 miteinander verbunden sind. Das innerste Hüllrohr 4 nimmt die Strahlungsquelle auf und trennt bzw. schützt diese vor Reaktionsmedien, die durch die äußeren Hüllrohre 41,42,43, bzw. durch den zwischen zwei ineinander angeordneten Hüllrohren 4,41,42,43 entstehenden Spalt geleitet bzw. in dem Spalt vorgelegt werden. Gegebenenfalls kann ein Zwischenraum zwischen ausgewählten Hüllrohren 4,41,42,43 auch zur Kühlung verwendet werden. Zur Einleitung bzw. Ausleitung eines Reaktionsoder Kühlmediums werden die am oberen Ende der Hüllrohre 41,42,43 vorliegenden Anschlussstutzen 44 verwendet.

Die Verschraubungsanordnung 5, die jeweils zwei ineinander angeordnete Hüllrohre 4 und 41,41 und 42 bzw. 42 und 43 miteinander abdichtend verbindet, und die im Detail in Fig. 9 dargestellt ist, setzt eine Hüllrohranordnung voraus, bei der das jeweils innere Hüllrohr 4,41,42 über das obere offene Ende des jeweils äußeren Hüllrohrs 41,42,43 herausragt. Die Verschraubungsanordnung 5 umfasst einen um das jeweils äußere Hüllrohr 41,42,43 (in Fig. 9 Hüllrohr 41) angeordneten Innenring 51 mit Außengewinde und eine um das jeweils innere Hüllrohr 4,41,42 (in Fig. 9 Hüllrohr 4) angeordnete Überwurfmutter 52 mit Innengewinde. Dabei ist die Überwurfmutter 52, deren Bund das innere Hüllrohr 4 umschließt, so dimensioniert, dass das Innengewinde mit dem Außengewinde des Innenrings 51, der das äußere Hüllrohr 41 umschließt, in Eingriff tritt. Ferner ist zwischen dem Innenring 51 und der Überwurfmutter 52 die Anordnung eines Zentrierrings 53, der innen umfänglich und an dem Bund der Überwurfmutter 52 anliegt und das innere Hüllrohr 4 umfasst, und die Anordnung von Dichtmitteln 54 vorgesehen. Zur Abdichtung des Innenrings 51 am äußeren Hüllrohr 41 wird ein O-Ring 54 zwischen dem Zentrierring 53 und dem Innenring 51, angrenzend an den Innenumfang der Überwurfmutter 52 und die Stirnfläche des äußeren Hüllrohrs 41, platziert, und zur Abdichtung der Überwurfmutter 52 am inneren Hüllrohr 4 wird ein O-Ring 54 zwischen dem Zentrierring 53 und der angefasten Durchtrittsöffnung am Bund der Überwurfmutter 52 um das innere Hüllrohr 4 angeordnet.

Ferner können die Photoreaktoren einer erfindungsgemäßen Reaktorvorrichtung bzw. eines erfindungsgemäßen Prozesssystems ferner mit Messstellen zur UV- bzw. Lichtmessung ausgestattet sein, die vorzugsweise online beispielsweise Ober ein Fiberglaskabel an eine USB-Schnittstelle erfolgt und durch eine Software ausgewertet und graphisch veranschaulicht wird. Messergebnisse der UV- bzw. Lichtmessung können durch eine Anzeigeeinrichtung der Schutz- und Versorgungsvorrichtung oder des Prozesssystems angezeigt werden. Da Strahlungsquellen einem Alterungsprozess unterliegen, sodass die Strahlungsleistung mit der Zeit abnimmt und sich gegebenenfalls auch das emittierte Spektrum ändern kann, kann eine Messwerteverarbeitungsvorrichtung auch eine Meldung ausgeben, wenn die UV- bzw. Lichtleistung des Strahlers unter eine voreingestellte Mindestleistung fällt, sodass ein Strahler rechtzeitig ausgetauscht werden kann.

So stellen die Reaktorvorrichtung und das Prozesssystem mit der Strahlerhalterung, der Verschraubungsanordnung etc. und der Schutz- und Versorgungseinrichtung einen modularen Baukasten für photochemische Prozesse dar und ermöglicht einen schnellen Wechsel auf unterschiedliche Reaktoren und Strahlungsquellen.

Die erfindungsgemäße Schutz- und Versorgungsvorrichtung erfüllt alle aktuellen Anforderungen bezüglich Sicherheitsnormen und kann an zukünftige Anforderungen angepasst werden. Ferner ist ein modularer Aufbau mit einer oder mehreren Schutz- und Versorgungsvorrichtungen möglich, um (photo-)chemische Prozessfolgen einfach zu realisieren und auch einzelne Stufen zu ändern.

**BEZUGSZEICHENLISTE**

| | | | |
|---|---|---|---|
| 1 | Schutz- und Versorgungsvorrichtung | 110 | Außenwand |
| 2, 2' | Photoreaktor, Reaktor | 111 | Innenwand |
| 3 | Strahlungsquelle | 112 | Kühlmitteleinlass |
| 30 | Strahlerhalterung | 113 | Kühlmittelauslass |
| 31 | Strahlergestänge | 114 | Trägerelement |
| 32 | Gewindestab | 115 | Einschubrack |
| 33 | Verstellkörper | 116 | Griff |
| 34 | Kopfteil | | |
| 35 | Anschlussbuchse | 12 | Tür |
| 36,36' | Anschlusskabel für Strahlungsquelle | 12' | Fenster |
| 4 | Strahlerhüllrohr | 12" | Türkasten |
| | | 13 | Schalter |
| 41,42,43 | weitere Hüllrohre | 14 | Steckdose |
| 44 | Anschlussstutzen | 14' | Verbindungskabel |
| 5 | Verschraubungsanordnung | 15 | Deckel |
| 51 | Innenring | 15' | Rastscharnier |
| | | 15" | Riegel |
| 52 | Überwurfmutter | 16 | Aufnahmevorrichtung |
| 53 | Zentrierring | 17 | Slotblech |
| 54 | Dichtring | 17' | Anschlussbuchse |
| 6 | Stativstange | 18 | Durchtrittsöffnungen |
| | | 19 | Ventilationsvorrichtung |
| 10 | Reaktorvorrichtung | 20 | Lüfteröffnung |
| 100 | Prozesssystem | | |
| 11 | kastenförmiges Gehäuse | 21 | Kabel |
| 11' | Gehäuse für Einschubracks | 22 | Schlauch |
| | | 23 | Rührwerk |
| L | Luftstrom | 24 | Kontrollleuchte |
| | | 24' | Alarmleuchte |

## Patentansprüche

1. Schutz- und Versorgungsvorrichtung (1) für einen chemischen Reaktor (2,2'),
**dadurch gekennzeichnet, dass**
die Schutz- und Versorgungsvorrichtung (1) durch ein Gehäuse (11) gebildet wird, dessen Wände doppelwandig ausgeführt sind und zumindest einen Kühlmitteleinund -auslass (112,113,19) aufweisen, wobei an einer Fläche des kastenförmigen Gehäuses (11) eine verschließbare Tür (12) ausgebildet ist, in der zumindest eine elektrische Versorgungsvorrichtung aufgenommen ist, die mit zumindest einer innen an der Tür (12) angeordneten Steckdose (14) und zumindest einem außen an der Tür (12) angeordneten Schalter (13) zur Schaltung der zumindest einen Steckdose (14) verbunden ist, wobei ein Kontaktschalter zwischen der Tür (12) und dem übrigen Gehäuse (11) vorgesehen ist, der mit der elektrischen Versorgungsvorrichtung verbunden ist.

2. Schutz- und Versorgungsvorrichtung (1) nach Anspruch 1,
**dadurch gekennzeichnet, dass**
die elektrische Versorgungsvorrichtung zumindest ein Netzteil und/oder ein Vorschaltgerät umfasst, mit der eine an der zumindest einen Steckdose (14) bereitgestellte Spannung einstellbar ist, wobei bei Vorliegen zumindest zweier Steckdosen (14) unterschiedliche Spannungen bereitstellbar sind.

3. Schutz- und Versorgungsvorrichtung (1) nach Anspruch 1 oder 2,
**dadurch gekennzeichnet, dass**
das kastenförmiges Gehäuse (11) an einer zu der Tür (12) benachbarten Wand, die vorzugsweise die Decke ist, einen verschließbaren Deckel (15) aufweist, wobei ein Kontaktschalter zwischen dem Deckel (15) und dem übrigen Gehäuse (11) vorgesehen ist, der der Kontaktschalter, der der Tür (12) zugeordnet ist, oder ein weiterer Kontaktschalter ist, der mit der elektrischen Versorgungsvorrichtung verbunden ist.

4. Schutz- und Versorgungsvorrichtung (1) nach Anspruch 3,
**dadurch gekennzeichnet, dass**
das kastenförmige Gehäuse (11) zumindest eine Gehäuselücke in zumindest einer der Wände, vorzugsweise der Decke neben dem Deckel (15) aufweist, wobei jede Gehäuselücke durch ein Slotblech (17) geschlossen ist, wobei zumindest eines der Slotbleche (17) eine integrierte Buchse (17') aufweist.

5. Schutz- und Versorgungsvorrichtung (1) nach zumindest einem der Ansprüche 1 bis 4,
**dadurch gekennzeichnet, dass**
das kastenförmige Gehäuse (11)
- lichtdicht ausgeführt ist, wobei ein Fenster (12') in zumindest einer der Seitenflächen des Gehäuses, vorzugsweise der Tür (12), mit einer austauschbaren Filterscheibe vorgesehen ist, und/oder
- Durchführungen (18) in zumindest einer Wand, bevorzugt in beiden Seitenwänden, für Kabel und/oder Schläuche (21,22) aufweist, und/oder
- zur Aufnahme von Baugruppenträgern für verschiedene austauschbare Vorschaltgeräte, Sensoren, Messgeräte, Automatisierungssysteme ausgebildet ist.

6. Schutz- und Versorgungsvorrichtung (1) nach zumindest einem der Ansprüche 1 bis 5,
**dadurch gekennzeichnet, dass**
im Inneren des kastenförmigen Gehäuses (11) zumindest an einer von der Tür (12) beabstandeten Seite verschiedene Aufnahmevorrichtungen (16) für Stativstangen (6) zur Befestigung des Reaktors (2,2') oder anderer Geräte im Inneren der Schutzund Versorgungsvorrichtung (1) vorgesehen sind.

7. Schutz- und Versorgungsvorrichtung (1) nach zumindest einem der Ansprüche 1 bis 6,
**dadurch gekennzeichnet, dass**
- die Schutz- und Versorgungsvorrichtung (1) eine Ventilationsvorrichtung (19) und einen Druckschalter aufweist, der mit der Ventilationsvorrichtung (19) zur Erzeugung eines Unterdrucks im kastenförmige Gehäuse (11) verbunden ist, und/oder
- in der Tür (12) ein mit einer außen an der Tür (12) eingebrachten Lüfteröffnung (20) verbundener Lüfter vorgesehen ist, um einen Überdruck an der zumindest einen elektrischen Versorgungsvorrichtung in der Tür (12) bereilzustellen.

8. Reaktorvorrichtung (10), umfassend einen chemischen Reaktor (2,2'),
**dadurch gekennzeichnet, dass**
der chemischen Reaktor (2,2') in einer Schutz- und Versorgungsvorrichtung (1) nach zumindest einem der Ansprüche 1 bis 7 angeordnet ist, wobei der Reaktor (2,2') zumindest elektrisch durch die Schutz- und Versorgungsvorrichtung (1) versorgt wird.

9. Reaktorvorrichtung (10) nach Anspruch 8,
**dadurch gekennzeichnet, dass**
der chemischen Reaktor (2,2') ein Photoreaktor (2) ist, der zumindest eine Strahlungsquelle (3) aufweist, die in einem ersten Hüllrohr (4) angeordnet ist, das zumindest für einen vorbestimmten Wellenlängenbereich der von der Strahlungsquelle (3) emittierten Strahlung transparent ist, wobei der Photoreaktor (2) zumindest ein zweites Hüllrohr (41,42,43) aufweist, in dem das erste Hüllrohr (4) angeordnet ist, wobei zwei ineinander angeordnete Hüllrohre (4,41,42,43), bei denen das innere Hüllrohr (4,41,42) über ein oberes offenes Ende des jeweils äußeren Hüllrohrs (41,42,43) herausragt, jeweils mit einer Verschraubungsanordnung (5) abdichtend verbunden sind, die einen um das jeweils äußere Hüllrohr (41,42,43) angeordneten Innenring (51) mit Außengewinde und eine um das jeweils innere Hüllrohr (4,41,42) angeordnete Überwurfmutter (52) mit Innengewinde aufweist, wobei die Überwurfmutter (52) so dimensioniert ist, dass ihr Innengewinde mit dem Außengewinde des Innenrings (51) in Eingriff tritt, und wobei zwischen dem Innenring (51) und der Überwurfmutter (52) ein Zentrierring (53) und Dichtmittel (54) zur Abdichtung des Innenrings (51) am jeweils äußeren Hüllrohr (41,42,43) und der Überwurfmutter (52) am inneren Hüllrohr (4,41,42) vorgesehen sind.

10. Reaktorvorrichtung (10) nach Anspruch 9,
**dadurch gekennzeichnet, dass**
das zumindest zweite Hüllrohr (41,42,43) Anschlussstutzen (44) am oberen offenen Ende des Hüllrohrs (41,42,43) aufweist, wobei Zu- und Ableitungen (22) für Prozessmedien von den Anschlussstutzen (44) durch die Schutz- und Versorgungsvorrichtung (1) mit einer außerhalb der Schutz- und Versorgungsvorrichtung (1) vorliegenden Prozessmedienquelle verbindbar sind.

11. Reaktorvorrichtung (10) nach Anspruch 9 oder 10,
**dadurch gekennzeichnet, dass**
der Photoreaktor (2) eine höhenverstellbare Strahlerhalterung (30) für die Strahlungsquelle (3) aufweist, wobei die Strahlerhalterung (30) ein Kopfteil (34) und einen Verstellkörper (33) aufweist, der Durchbohrungen aufweist, wobei die Durchbohrungen einenends ein Gewinde aufweisen, in die Gewindestäbe (32), die mit dem Kopfteil (34) verbunden sind, austauschbar aufgenommen sind, und wobei anderenends in den Durchbohrungen jeweils eine Anschlussbuchse (35) aufgenommen ist, in denen ein Strahlergestänge (31), das die Strahlungsquelle (3) kontaktiert, verschiebbar aufgenommen ist, wobei das Strahlergestänge (31) die Gewindestäbe (32) unmittelbar oder mittelbar über die Anschlussbuchse (35) und/oder den Verstellkörper (33) kontaktiert.

12. Reaktorvorrichtung (10) nach Anspruch 11,
**dadurch gekennzeichnet, dass**
die Gewindestäbe (32) hohl sind und das Strahlergestänge (31) in den Gewindestäben (32) verschiebbar aufgenommen ist.

13. Reaktorvorrichtung (10) nach zumindest einem der Ansprüche 9 bis 12,
**dadurch gekennzeichnet, dass**
der Photoreaktor (2) Messstellen für eine online UV-/Lichtmessung aufweist, die mit einer Messwerteverarbeitungs- und/oder Anzeigeeinrichtung in Verbindung stehen, von denen zumindest die Anzeigeeinrichtung außen an oder außerhalb der Schutzund Versorgungsvorrichtung (1) vorgesehen ist.

14. Prozesssystem, das zumindest zwei parallel oder sequentiell geschaltete Reaktorvorrichtungen aufweist,
**dadurch gekennzeichnet, dass**
die Reaktorvorrichtungen Reaktorvorrichtungen (10) nach zumindest einem der Ansprüche 8 bis 13 sind, wobei die in den Schutz- und Versorgungsvorrichtung (1) angeordneten Reaktoren (2,2') miteinander verbunden oder verbindbar sind.

15. Prozesssystem nach Anspruch 14,
**dadurch gekennzeichnet, dass**
zumindest einer der Reaktoren (2,2') ein Photoreaktor (2) ist.
